# EUROPÄISCHE PATENTSCHRIFT

(11) **EP 0 248 182 B1**
(45) Veröffentlichungstag und Bekanntmachung des Hinweises auf die Patenterteilung: **23.06.1993**
(21) Anmeldenummer: 87105737.8
(22) Anmeldetag: 16.04.1987
(51) Int. Cl.: D04H 13/00, D04H 1/48, D04H 1/68

(54) **Materialbahn, insbesondere für Filterzwecke, Verfahren zu deren Herstellung sowie deren Verwendung**
Web of material, especially for filtration, method for making it, and its use
Feuille de matière, en particulier pour la filtration, son procédé de fabrication ainsi que son emploi

(30) Priorität: 02.05.1986 DE 3614949
(43) Veröffentlichungstag der Anmeldung: 09.12.1987
(73) Patentinhaber: Thomas Josef Heimbach GmbH & Co., D-52353 Düren (DE)
(72) Erfinder: Janssen, Eberhard, Dr., D-5160 Düren-Echtz (DE); Hunold, Willi, D-5161 Merzenich 3 (DE)
(74) Vertreter: Paul, Dieter-Alfred, Dipl.-Ing.

(56) Entgegenhaltungen:
- DE-A- 1 560 689
- FR-A- 2 128 176
- GB-A- 881 450
- US-A- 3 340 335
- US-A- 4 369 081

## Beschreibung

Die Erfindung betrifft eine Trennmaterialbahn als Filtermittel oder als Papiermaschinenbespannung mit einem Nadelfilz, der einen offenporigen Kunststoffschaum trägt.

Als Filtermedien werden heute vielfach retikulierte, d.h. offenporige Filterschäume verwendet, beispielsweise aus Polyurethan oder Acrylsäureester (Ochs, Filterschaum - Perfekt in vielen Bereichen; Wasser, Luft und Betrieb 10̸/84, Seite 43 ff). Die Vorteile gegenüber Faservliesen liegen in ihrem homogenisierten Aufbau und der stärker ausgebildeten dreidimensionalen Struktur. Außerdem läßt sich die Durchlässigkeit solcher Filterschäume sehr fein und reproduzierbar einstellen.

In einem Anwendungsbeispiel wird der Filterschaum schichtweise auf einen Nadelfilz in der Weise aufgebracht, daß der zellulare Schaum auf der Oberfläche des Nadelfilzes haftet und dort eine Filterschicht bildet. Als Vorteile werden angegeben, daß durch die Beschichtung ein hoher Abscheidegrad und geringe Partikeleinwanderungen sowie eine glatte Oberfläche mit Nadelfilzen erreicht wird (Verbessertes Entstaubungsfiltermedium zur Oberflächenfiltration; Wasser, Luft und Betrieb 11-12/85, Seite 49).

Bei diesem Filtermedium hat sich als nachteilig erwiesen, daß der Filterschaum eine schlechte Haftung an der Oberfläche des Nadelfilzes hat und deshalb mechanischen Beanspruchungen häufig nicht gewachsen ist. Dies kann mit dem unterschiedlichen elastischen Verhalten von Filterschaum und Nadelfilz und mit den für eine gute Haftung zu kleinen Kontaktflächen zwischen Schaum und Faserauflage zusammenhängen. Entsprechend ist der Einsatzzweck solcher Filtermedien begrenzt.

Der Einsatz von offenzelligem Kunststoffschaum ist auch im Bereich der Bespannungen von Papiermaschinen versucht worden. So ist aus der US-A-3 617 442 eine Bespannung für den Fourdrinier-Bereich einer Papiermaschine bekannt, die aus einem von einer offenzelligen Schaumschicht umgebenen Stützgelege besteht. Solche Bespannungen haben sich jedoch nicht bewährt und werden deshalb heutzutage nicht eingesetzt. Die Umschäumung hielt den harten Anforderungen gerade im Fourdrinier-Bereich nicht stand, so daß die Bespannung schnell zerstört war.

Ein erneuter Versuch, offenzelligen Kunststoffschaum bei Bespannungen von Papiermaschinen, insbesonderen in deren Trockenbereich, einzusetzen, ist aus der EP-A-0̸ 156 0̸62 zu ersehen. In dieser Druckschrift wird vorgeschlagen, den Kunststoffschaum in das Innere eines Drahtgliederbandes oder eines Gewebes einzubringen, so daß der Kunststoffschaum nicht über die äußeren Begrenzungen des Drahtgliederbandes bzw. Gewebes vorsteht. Verfahrensmäßig wird so vorgegangen, daß der Kunststoffschaum auf eine Oberfläche aufgebracht wird, wobei er in das Gewebe bzw. Drahtgliederband einsinkt, und daß anschließend die überstehende Menge abgerakelt wird. Mit Hilfe des Kunststoffschaums kann die Luftdurchlässigkeit über das jeweilige Band in weiten Grenzen und sehr gleichmäßig eingestellt werden.

Auch bei dieser Art der Kombination einer Stützstruktur - hier in Form eines Drahtgliederbandes oder eines Gewebes - mit einem offenzelligen Kunststoffschaum ist nicht deren unterschiedliches Verhalten bei mechanischen - und auch thermischen - Beanspruchungen beachtet worden. Die Kunststoffdrähte, aus denen das Drahtgliederband bzw. das Gewebe bestehen, sind im Vergleich zum Kunststoffschaum relativ starre und an ihrer Oberfläche glatte Gebilde, die insbesondere bei der Verwendung in einer Papiermaschine vergleichsweise große Relativbewegungen zueinander ausführen, da sie dort starken Umlenkungen und damit Biegungen unterworfen sind. Dies führt zu entsprechenden Scherkräften an der Grenzfläche zwischen den Kunststoffäden und dem Kunststoffschaum mit der Folge, daß es schon nach kurzer Zeit zu Ausfransungen und dann großflächigeren Ablösungen kommt.

Ein weiteres Beispiel für eine Papiermaschinenbespannung aus einer Kombination einer Stützstruktur mit einem Kunststoffschaum ist der US-A-4 369 0̸81 zu entnehmen. Bei dieser Papiermaschinenbespannung wird zunächst ein vorgefertigtes Schaumstoffband auf ein endloses Trägergewebe aufgespannt. Auf die Außenseite des Schaumstoffbandes wird dann eine Faserschicht aufgebracht, die anschließend in den Schaumstoff eingenadelt und durch diesen hindurch bis in das Trägergewebe durchgenadelt wird.

Diese Art der Herstellung hat zur Folge, daß zwischen den Fasern und dem Schaumstoff lediglich eine mechanische Verankerung erreicht wird. Es besteht die Gefahr, daß die Fasern je nach Beanspruchung keinen genügenden Halt haben und deshalb ausreißen. Außerdem stehen die Fasern von der Schaumoberfläche im wesentlichen senkrecht hoch, so daß die Oberfläche rauh ist. Bei der Vernadelung wird das Schaumstoffband ausgerissen und weitestgehend zerstört. Die Durchlässigkeit der Papiermaschinenbespannung wird im wesentlichen durch die Kanäle bestimmt, die auf Grund des Durchstechens der Nadeln im Schaumstoffband entstehen.

In der US-A-3 340̸ 335 ist ein Materialbahn offenbart, bei deren Herstellung ein Kunststoffschaum in situ gezeugt wird. Der Kunststoffschaum ist offensichtlich geschlossenporig, denn die Materialbahn ist insbesondere für thermisch isolierende Bekleidungsstücke bestimmt. Soweit das Produkt durchlässig ist, wird dies dadurch erreicht, daß die Zwischenräume zwischen den Garnen bzw. Fasern nur teilweise mit Schaum gefüllt werden. Die Druckschrift enthält keinen Hinweis auf die Verwendung der Materialbahn als Trennmaterialbahn.

Die FR-A-2 128 176 bezieht sich auf allgemeine Filzprodukte zum Zwecke der Polsterung, beispielsweise für Sohlen von Hausschuhen, Schuhen oder für Teppiche. Die Verwendung als Trennmaterialbahn ist ebenso wenig erwähnt, wie die Erzeugung eines offenporigen Kunststoffschaumes.

Der Erfindung liegt die Aufgabe zugrunde, eine Trennmaterialbahn zu finden, die aus einer Basisstruktur mit einer Kunststoffschaumschicht besteht und die sich im Vergleich zu den vorbekannten Trennmaterialbahnen durch eine wesentlich verbesserte Haltbarkeit und damit universelleren Einsatzbereich auszeichnet.

Diese Aufgabe wird erfindungsgemäß dadurch gelöst, daß in an sich bekannter Weise ein Nadelfilz verwendet wird, bei dem der auf dem Nadelfilz zunächst schichtweise aufgebrachte, offenporige Kunststoffschaum derart in den Nadelfilz eingedrückt ist, daß er in offenporiger Form vollständig in den Nadelfilz eingelagert ist, und zwar je nach Anforderung nur über einen Teil des Nadelfilzquerschnittes oder den ganzen Querschnitt.

Durch das vollständige Einbringen des Kunststoffschaumes in die Poren des Nadelfilzes wird eine außerordentlich innige und feste Verbindung zwischen Fasern und Schaum erreicht. Die wirre und dichte Verteilung der Fasern verankert die Kunststoffschaumschicht derart in dem Nadelfilz, daß Ausfransungen und Ablösungen selbst bei sehr harten mechanischen Beanspruchungen nicht mehr auftreten. Dies wird begünstigt durch die Elastizität der einzelnen Fasern der Faserschicht, denn die Fasern können sich den elastischen Bewegungen des Kunststoffschaumes bei Verbiegungen der Trennmaterialbahn ohne weiteres anpassen, so daß ein Ablösen des Schaumes von den Fasern nicht eintritt.

Dabei hat sich überraschenderweise gezeigt, daß die Filtereigenschaften des Kunststoffschaumes durch dessen vollständige Einbettung in den Nadelfilz nicht leiden. Offenbar wird die als vorteilhaft gegenüber reinen Nadelfilzfiltern geschätzte Homogenität des Kunststoffschaums durch die an sich inhomogen verteilten Fasern des Nadelfilzes nicht derart gestört, daß Nachteile bezüglich des Filterverhaltens entstehen.

Auf Grund der außerordentlich günstigen Eigenschaften bezüglich der Haltbarkeit eignet sich die erfindungsgemäß Trennmaterialbahn nicht nur für Filtrationszwecke, sondern auch für den Einsatz in Papiermaschinen, und zwar hier insbesondere im Trockenbereich und auch im Pressenbereich. Durch die erfindungsgemäße Einbettung des Kunststoffschaums in den Nadelfilz werden trotz der hohen thermischen und mechanischen Beanspruchungen in der Papiermaschine lange Laufzeiten erreicht. Es können also jetzt die günstigen Eigenschaften von offenzelligem Kunststoffschaum in einer Papiermaschine genutzt werden, ohne daß Nachteile hinsichtlich der Laufzeit solcher Trennmaterialbahnen gegenüber den bekannten Papiermaschinenbespannungen ohne Kunststoffschaum befürchtet werden müssen.

In Ausbildung der Erfindung ist vorgesehen, daß der Nadelfilz in an sich bekannter Weise mit einer Stützstruktur als Verstärkung ausgestattet ist. Eine solche Stützstruktur kann aus einem Gewebe, einer Wirkware, einem Drahtgliederband, aber auch aus einer Schicht mit stärkeren und damit steiferen Fasern bestehen. Die Stützstruktur sollte dann im wesentlichen frei von Kunststoffschaum gehalten werden, der Kunststoffschaum also auf die - bei mehrschichtigem Aufbau feine - Faserschicht beschränkt sein. Auf diese Weise werden Ablösungsprobleme zwischen dem Stützgewebe und dem Kunststoffschaum vermieden, obwohl sie sich bei der erfindungsgemäßen Ausbildung wegen der Einbindung in die Faserschicht nicht so gravierend auswirken würden wie bei der Ausbildung nach der EP-A-0̸ 156 0̸62.

In weiterer Ausgestaltung der Erfindung ist vorgesehen, daß der Nadelfilz aus beidseitig auf die Stützstruktur aufgenadelten Faservliesen gebildet ist. Der Kunststoffschaum kann dann in beide Seiten des Nadelfilzes eingebettet werden, um entsprechende Filterwirkungen bzw. Luftdurchlässigkeitswerte zu erreichen. Dabei können je nach den geforderten Eigenschaften Kunststoffschäume mit unterschiedlichen Eigenschaften und in voneinander abweichender Eindringtiefe vorgesehen werden.

Nach der Erfindung ist ferner vorgesehen, daß die Oberfläche der Trennmaterialbahn auf der bzw. den mit Kunststoffschaum ausgerüsteten Seite(n) geglättet ist. Die auf diese Weise erhaltene glatte Oberfläche wirkt sich bei Verwendung der Trennmaterialbahn im Filterbereich günstig auf das Abreinigungsverhalten aus. Auch wenn die Trennmaterialbahn im Papiermaschinenbereich Verwendung findet, werden durch die glatte Oberfläche vorteilhafte Effekte erzielt.

Der erfindungsgemäße in den Nadelfilz eingelagerte Kunststoffschaum eignet sich darüber hinaus hervorragend als Träger von Substanzen, die der Trennmaterialbahn - je nach Einsatzzweck - bestimmte zusätzliche Eigenschaften geben können. Hier kommen insbesondere hydrophob, adsorptiv, antiadhäsiv, oleophob, antistatisch und/oder flammhemmend wirkende Substanzen in Frage, wobei diese Substanzen an Hand der vorstehend aufgeführten Wirkungen im einzelnen den einschlägigen Lexikas, insbesondere Römpps Chemielexikon, entnommen werden können.

In den Kunststoffschaum können darüber hinaus auch katalytisch wirkende Substanzen eingelagert werden, um neben dem mechanischen Filtereffekt zusätzlich eine chemische Schadstoffbeseitigung beispielsweise von Stickstoff- und/oder Schwefeloxiden zu erzielen. Die Substanzen können dabei in Teilchen oder Faserform eingebettet sein. Als Substanzen kommen die für die jeweilige Schadstoffbeseitigung üblichen und aus der Fachliteratur zu entnehmenden Materialien in Frage.

Die erfindungsgemäße Trennmaterialbahn wird dadurch hergestellt, daß zunächst ein Nadelfilz gebildet und auf diesen eine Schicht aus offenporigem Kunststoffschaum aufgebracht wird, der anschließend unter Beibehaltung der offenporigen Form in den Nadelfilz vollständig eingedrückt wird, und zwar vorzugsweise mittels einer Kalandrierung. Diese Art der Herstellung hat den Vorteil, daß durch die Druck- und Hitzeeinwirkung eine Verfestigung der gesamten Struktur und gleichzeitig auch eine Glättung der auf diese Weise enthaltenen Oberfläche erzielt wird. Dabei tritt überraschenderweise nicht mehr das bei der Kalandrierung von Nadelfilzen ohne Kunststoffschaumauftrag auftretende Verspröden der Fasern an der Oberfläche auf. Offenbar wird die Wärme von den Fasern schnell an den sie umgebenden Kunststoffschaum abgegeben, so daß eine nachteilige Veränderung der Fasern vermieden wird, ihre ursprüngliche Elastizität, die ja für den Halt des Kunststoffschaums innerhalb des Nadelfilzes wichtig ist, erhalten bleibt.

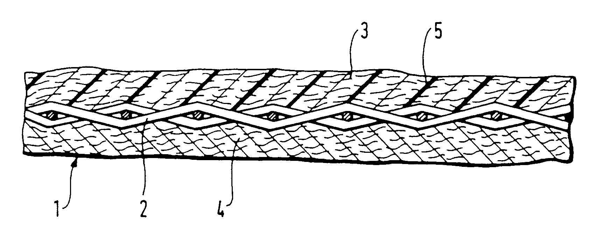

In der Zeichnung ist die Erfindung an Hand eines Ausführungsbeispiels näher veranschaulicht. Sie zeigt einen Teilquerschnitt durch eine Trennmaterialbahn (1), die als Nadelfilz ausgebildet ist. Sie hat ein Stützgewebe (2), dessen Gewebebindung den jeweiligen Anforderungen angepaßt sein kann.

Im vorliegenden Fall ist eine einfache Leinwandbindung dargestellt.

Auf beide Seiten des Stützgewebes (2) ist je ein Faservlies (3, 4) aufgenadelt. Die Ausbildung der einzelnen Fasern und deren Dichte wird ebenfalls nach den im Stand der Technik bekannten Regeln den jeweiligen Anforderungen angepaßt. In das obere Faservlies (3) ist ein offenzelliger Kunststoffschaum (5) eingebettet, der nach innen bis zum Stützgewebe (2) reicht. Er füllt die Zwischenräume zwischen den Fasern des Faservlieses (3) aus und reicht bis zu dessen Oberfläche, geht aber nicht über diese hinaus.

Das Einbringen des Kunststoffschaumes (5) geschieht dadurch, daß zunächst eine Kunststoffschaumschicht auf die Oberfläche des Faservlieses (3) aufgebracht wird, und zwar mit den bekannten Techniken. Anschließend wird die so erhaltene Trennmaterialbahn einer Kalandrierung unterworfen, durch die die Kunststoffschaumschicht in das Faservlies (3) vollständig hineingedrückt wird. Gleichzeitig entsteht eine sehr glatte Oberfläche, was sowohl bei der Verwendung als Filtermaterial als auch als Bespannung in Papermaschinen günstig ist.

## Patentansprüche

1. Trennmaterialbahn als Filtermittel oder als Papiermaschinenbespannung mit einem Nadelfilz, der einen offenporigen Kunststoffschaum trägt,
dadurch gekennzeichnet, daß der auf den Nadelfilz (1) zunächst schichtweise aufgebrachte, offenporige Kunststoffschaum (5) derart in den Nadelfilz (1) eingedrückt ist, daß er in offenporiger Form vollständig in den Nadelfilz (1) eingelagert ist.

2. Trennmaterialbahn nach Anspruch (1),
dadurch gekennzeichnet, daß der Nadelfilz (1) mit einer Stützstruktur (2) ausgestattet ist.

3. Trennmaterialbahn nach Anspruch (2),
dadurch gekennzeichnet, daß die Stützstruktur (2) im wesentlichen frei von Kunststoffschaum (5) gehalten ist.

4. Trennmaterialbahn nach Anspruch (2) oder (3),
dadurch gekennzeichnet, daß der Nadelfilz (1) aus beidseitig auf die Stützstruktur (2) aufgenadelten Faservliesen (3, 4) gebildet ist.

5. Trennmaterialbahn nach einem der Ansprüche (1) bis (4),
dadurch gekennzeichnet, daß der Kunststoffschaum (5) in beide Seiten des Nadelfilzes (1) eingebettet ist.

6. Trennmaterialbahn nach einem der Ansprüche (1) bis (5),
dadurch gekennzeichnet, daß die Oberfläche der Trennmaterialbahn (1) auf der bzw. den mit Kunststoffschaum (5) ausgerüsteten Seite(n) geglättet ist.

7. Trennmaterialbahn nach einem der Ansprüche (1) bis (6),
dadurch gekennzeichnet, daß der Kunststoffschaum (5) mit einer hydrophob, adsorptiv, antiadhäsiv, oleophob, antistatisch und/oder flammhemmend wirkenden Substanz versehen ist.

8. Trennmaterialbahn nach einem der Ansprüche (1) bis (7),
dadurch gekennzeichnet, daß in den Kunststoffschaum (5) katalytisch wirkende Substanzen eingelagert sind.

9. Verfahren zur Herstellung der Trennmaterialbahn nach einem der Ansprüche (1) bis (8), bei dem ein Nadelfilz gebildet und mit einer Schicht aus Kunststoffschaum verbunden wird,
dadurch gekennzeichnet, daß zunächst ein Nadelfilz gebildet und auf diesen eine Schicht aus offenporigem Kunststoffschaum aufgebracht wird, der anschließend unter Beibehaltung der offenporigen Form in den Nadelfilz vollständig eingedrückt wird.

## Claims

1. A separating fabric length as a filter medium or as a covering for a paper machine, with a needle felt which supports an open-pored plastic foam, characterised in that the open-pored plastic foam (5) which is first deposited as a layer on the needle felt (1) is pressed into the needle felt (1) in such a way that it completely dispersed in open-pored form in the needle felt (1).

2. A separating fabric length according to claim 1, characterised in that the needle felt (1) is provided with a support structure (2).

3. A separating fabric length according to claim 2, characterised in that the support structure (2) is maintained substantially free from plastic foam (5).

4. A separating fabric length according to claims 2 or 3, characterised in that the needle felt (1) is formed from fibre mats (3, 4) pinned to the support structure (2) on both sides.

5. A separating fabric length according to any one of claims 1 to 4, characterised in that the plastic foam (5) is embedded in both sides of the needle felt (1).

6. A separating fabric length according to any one of claims 1 to 5, characterised in that the surface of the separating fabric length (1) is smoothed on the side or the sides provided with plastic foam (5).

7. A separating fabric length according to any one of claims 1 to 6, characterised in that the plastic foam (5) is provided with a substance with a hydrophobic, adsorptive, anti-adhesive, oleophobic, antistatic and/or flame-retardant effect.

8. A separating fabric length according to any one of claims 1 to 7, characterised in that catalytically-acting substances are dispersed in the plastic foam (5).

9. A process for manufacturing the separating fabric length according to any one of claims 1 to 8, wherein a needle felt is formed and joined to a layer of plastic foam, characterised in that a needle felt is first formed and a layer of open-pored plastic foam is deposited thereon, which is subsequently completely pressed into the needle felt whilst maintaining its open-pored form.

## Revendications

1. Feuille de matière de séparation en tant que moyen de filtration ou en tant que revêtement d'une machine à papier avec un feutre aiguilleté qui porte une mousse en matière plastique à pores ouverts
**caractérisée en ce**
que la mousse en matière plastique (5) à pores ouverts est d'abord disposée en couches sur le feutre aiguilleté (1) et enfoncée dans le feutre aiguilleté (1) de manière à ce qu'elle s'insère complètement sous la forme à pores ouverts dans le feutre aiguilleté (1).

2. Feuille de matière de séparation selon la revendication (1)
**caractérisée en ce**
que le feutre aiguilleté (1) est pourvu d'une structure d'appui (2).

3. Feuille de matière de séparation selon la revendication (2)
**caractérisée en ce**
que la structure d'appui (2) est pour l'essentiel tenue libre de mousse en matière plastique (5).

4. Feuille de matière de séparation selon la revendication (2) ou (3)
**caractérisée en ce**
que le feutre aiguilleté (1) est formé de matelas de fibres (3,4) aiguilletés de part et d'autre sur la structure d'appui (2)

5. Feuille de matière de séparation selon l'une des revendications (1) à (4),
**caractérisée en ce**
que la mousse en matière plastique (5) est déposée dans les deux côtés du feutre aiguilleté (1).

6. Feuille de matière de séparation selon l'une des revendications (1) à (5)
**caractérisée en ce**
que la surface de la feuille de matière de séparation (1) sur le ou les côté(s), muni(s) de mousse en matière plastique, est lissée.

7. Feuille de matière de séparation selon l'une des revendications (1) à (6)
**caractérisée en ce**
que la mousse en matière plastique (5) est pourvue d'une substance hydrophobe, adsorbante, antiadhésive, oléophobe, antistatique et/ou ignifuge.

8. Feuille de matière de séparation selon l'une des revendications (1) à (7)
**caractérisée en ce**
que dans la mousse en matière plastique (5) sont déposées des substances à action catalytique.

9. Procédé de fabrication de la feuille de matière de séparation selon l'une des revendications (1) à (8) au cours duquel un feutre aiguilleté est formé et relié à une couche de mousse en matière plastique
**caractérisée en ce**
qu'un feutre aiguilleté est d'abord formée et sur ce dernier est disposée une couche de mousse en matière plastique à pores ouverts qui ensuite, en conservant la forme à pores ouverts est enfoncée complètement dans le feutre aiguilleté.
